# EUROPEAN PATENT SPECIFICATION

(11) **EP 3 715 534 B1**
(45) Date of publication and mention of the grant of the patent: **25.10.2023**
(21) Application number: 20164824.3
(22) Date of filing: 23.03.2020
(51) Int. Cl.: E02F 3/34, E02F 3/627, E02F 9/00, G01G 19/00, G01G 19/08

(54) **SYSTEM AND METHOD FOR AUTOMATIC WEIGHT MONITORING AND CONTROL DURING A MATERIAL MOVING OPERATION**
SYSTEM UND VERFAHREN ZUR AUTOMATISCHEN GEWICHTSÜBERWACHUNG UND -KONTROLLE WÄHREND EINES MATERIALBEWEGUNGSVORGANGS
SYSTÈME ET PROCÉDÉ DE SURVEILLANCE ET DE RÉGLAGE AUTOMATIQUES DU POIDS PENDANT UNE OPÉRATION DE DÉPLACEMENT DE MATÉRIAU

(30) Priority: 25.03.2019 US 201916363853
(43) Date of publication of application: 30.09.2020
(73) Proprietor: CNH Industrial Italia S.p.A., 10156 Torino (IT)
(72) Inventor: Gulati, Navneet, Naperville, Illinois 60565 (US); Singh, Aditya, Bolingbrook, Illinois 60490 (US); Wu, Duqiang, Bolingbrook, Illinois 60490 (US)
(74) Representative: CNH Industrial IP Department

(56) References cited:
- US-A1- 2006 070 773
- US-A1- 2007 135 985
- US-A1- 2014 336 874
- US-A1- 2018 229 988

## Description

### FIELD OF THE INVENTION

The present subject matter relates generally to work vehicles and, more particularly, to a system and method for use with a work vehicle that allows for automatic weight monitoring and control during the performance of a material moving operation, such as a multi-material moving operation.

### BACKGROUND OF THE INVENTION

Work vehicles having loader arms, such as wheel loaders, skid steer loaders, backhoe loaders, compact track loaders, and the like, are a mainstay of construction work and industry. For example, wheel loaders include a pair of loader arms pivotally coupled to the vehicle's chassis that can be raised and lowered at the operator's command. The loader arms typically have an implement attached to their end, thereby allowing the implement to be moved relative to the ground as the loader arms are raised and lowered. For example, a bucket is often coupled to the loader arms, which allows the wheel loader to be used to carry supplies or particulate matter, such as gravel, sand, or dirt, around a worksite.

For certain material moving operations in which different materials are being mixed together (e.g., mixing feed), the operator is required to know the weight of each material being added to the mix. Conventionally, such operations require that the operator scoop up a load of a first material to be mixed and transport it to a scale. The first material is then slowly dumped onto the scale until the scale reads the appropriate weight for the first material. The excess material remaining in the bucket must then be returned back to the pile/source of the first material. This process must then be repeated for each additional material being mixed together, thereby requiring multiple trips back and forth between the material source/pile and the scale, as well potentially multiple trips to transport the weighed material to its final destination.

Recently, weight monitoring systems have been developed that allow for the weight of the material contained within a bucket to be detected without the use of an external scale. For example US2006/070773A1 shows a system for automatic weight monitoring and control during the performance of a material moving operation by a work vehicle. However, despite the elimination of the external scale, inefficiencies still exist during the performance of a material moving operation, including the need to often make trips back to the material source/pile to return unused material. For example, to date, the industry still lacks an effective solution for performing multi-material moving operations, such as material mixing operations, in which two or more different materials are loaded into the bucket at the same time.

Accordingly, a system and method for automatic weight monitoring and control during a material moving operation, such as a multi-material moving operation, would be welcomed in the technology.

### BRIEF DESCRIPTION OF THE INVENTION

Aspects and advantages of the invention will be set forth in part in the following description, or may be obvious from the description, or may be learned through practice of the invention. The invention is set out in independent method and apparatus claims 1 and 11.

In one aspect, the present subject matter is directed to a method for providing automatic weight monitoring and control during the performance of a material moving operation by a work vehicle, wherein the work vehicle includes a loader arm and an implement coupled to the loader arm. The method includes receiving, with a computing device, at least one input associated with a first target weight for a first material to be collected within the implement and a second target weight for a second material to be collected within the implement. Upon receipt of an indication that the implement has been pushed into a source of the first material, the method also includes monitoring, with the computing device, a weight of the first material collected within the implement as the implement is being raised relative to the source of the first material and notifying, with the computing device, an operator of the work vehicle when it is determined that the weight of the first material is equal to the first target weight or falls within a first tolerance range associated the first target weight. Additionally, upon receipt of an indication that the implement has been pushed into a source of the second material, the method includes monitoring, with the computing device, a collective weight of the first and second materials as the implement is being raised relative to the source of the second material. Moreover, the method includes determining, with the computing device, a weight of the second material collected within the implement based at least in part on the collective weight of the first and second materials within the implement, and notifying, with the computing device, the operator of the work vehicle when it is determined that the weight of the second material is equal to the second target weight or falls within a second tolerance range associated with the second target weight.

In another aspect, the present subject matter is directed to a method for providing automatic weight monitoring and control during the performance of a material moving operation by a work vehicle. The method includes receiving, with a computing device, an input associated with a target weight for a material to be collected within the implement. Additionally, upon receipt of an indication that an implement of the vehicle has been pushed into a source of the material, the method includes automatically controlling, with the computing device, an operation of loader arms of the vehicle to raise the implement and the material collected therein relative to the source of the material. In addition, the method includes monitoring, with the computing device, a weight of the material collected within the implement as the implement is being raised relative to the source of material, and notifying, with the computing device, an operator of the work vehicle when it is determined that the monitored weight of the material is equal to the target weight or fails within a tolerance range associated with the target weight.

In yet another aspect, the present subject matter is directed to a system for automatic weight monitoring and control during the performance of a material moving operation by a work vehicle. The system includes a loader arm, an implement pivotably coupled to the loader arm, and a load weight sensor configured to detect an operating parameter indicative of a weight of material contained within the implement. The system also includes a controller communicatively coupled to the load weight sensor. The controller is configured to receive an input associated with a target weight for the material to be collected within the implement, and, upon receipt of an indication that the implement has been pushed into a source of the material, automatically control an operation of the loader arm to raise the implement and the material collected therein relative to the source of the material. In addition, the controller is configured to monitor a weight of the material collected within the implement as the implement is being raised relative to the source of material, and notify an operator of the work vehicle when it is determined that the monitored weight of the material is equal to the target weight or fails within a tolerance range associated with the target weight.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a side view of one embodiment of a work vehicle in accordance with aspects of the present subject matter;
FIG. 2 illustrates a schematic diagram of one embodiment of a system for automatic weight monitoring and control during the performance of a material moving operation in accordance with aspects of the present subject matter;
FIG. 3 illustrates a flow diagram of one embodiment of a method for automatic weight monitoring and control during a material moving operation in accordance with aspects of the present subject matter; and
FIG. 4 illustrates a flow diagram representing a specific implementation of one embodiment of a method for providing automatic weight monitoring and control during the performance of a material moving operation accordance with aspects of the present subject matter.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

In general, the present subject matter is directed to systems and methods for providing automatic weight monitoring and control during the performance of a material moving operation by a work vehicle. For example, as will be described below, the present subject matter may, in several embodiments, be utilized with a front loader or any other vehicle including movable loader arms and an implement (e.g., a bucket) pivotably coupled to the loader arms that is configured to scoop up and move material during a material moving operation.

In accordance with aspects of the present subject matter, the disclosed system and method may be used to automate aspects of the material collection portion of a material moving operation. Specifically, in several embodiments, an operator may input a desired or target weight of material to be collected and drive the vehicle such that its implement is pushed into the pile or source of the material. Once the implement has been pushed into the material pile/source, the operator may, for example, provide an input requesting that the controller automatically control the operation of the vehicle to pull the desired weight of material from the pile/source. For instance, upon receipt of the operator input, the controller may be configured to automatically lift the implement relative the material source/pile as the weight of the material within the implement is being continuously monitored. If the load weight is too low, the controller may notify the operator that additional material is required, which may then prompt the operator to resume control and push the implement back into the material source/pile. In contrast, if the load weight is too high, the controller may be configured to automatically execute an implement shaking operation to remove material from the implement 30. Once the load weight is equal to the target weight (or falls within the tolerance range defined relative to the target weight), the controller may notify the operator that the desired amount of material is contained within the implement. As will be described below, such a process may be used to collect a single material within the implement or multiple materials within the implement (in which case the weight of each material added to the implement may be independent tracked and controlled).

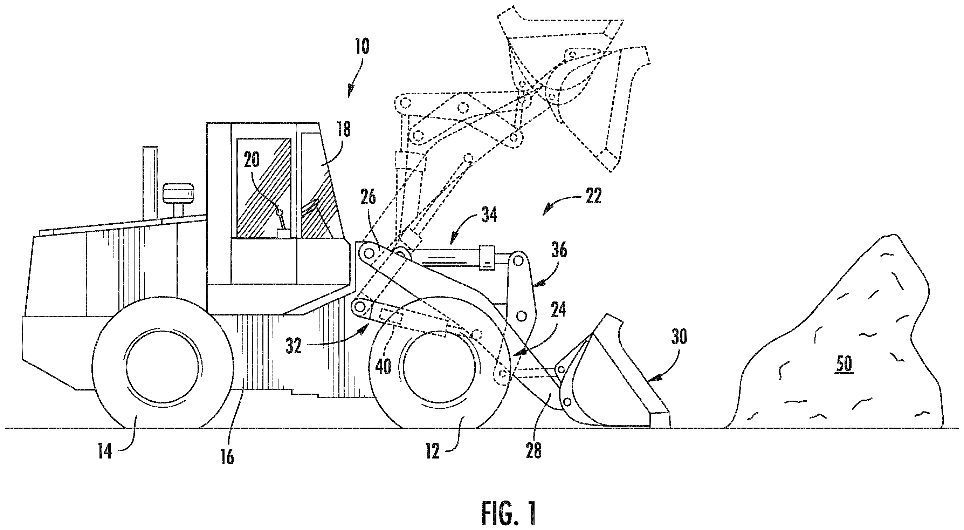

Referring now to the drawings, FIG. 1 illustrates a side view of one embodiment of a work vehicle 10. As shown, the work vehicle 10 is configured as a wheel loader. However, in other embodiments, the work vehicle 10 may be configured as any other suitable work vehicle known in the art, such as any other work vehicle including movable loader arms (e.g., any other type of front loader, such as skid steer loaders, backhoe loaders, compact track loaders and/or the like).

As shown in FIG. 1, the work vehicle 10 includes a pair of front wheels 12, a pair or rear wheels 14 and a chassis 16 coupled to and supported by the wheels 12, 14. An operator's cab 18 may be supported by a portion of the chassis 16 and may house various control or input devices (e.g., levers, pedals, control panels, buttons and/or the like) for permitting an operator to control the operation of the work vehicle 10. For instance, as shown in FIG. 1, the work vehicle 10 may include one or more control levers 20 for controlling the operation of one or more components of a lift assembly 22 of the work vehicle 10.

As shown in FIG. 1, the lift assembly 22 may include a pair of loader arms 24 (one of which is shown) extending lengthwise between a first end 26 and a second end 28, with the first ends 26 of the loader arms 24 being pivotally coupled to the chassis 16 and the second ends 28 of the loader arms 24 being pivotally coupled to a suitable implement 30 of the work vehicle 10. (e.g., a bucket, fork, blade, and/or the like). In addition, the lift assembly 22 also includes a plurality of actuators for controlling the movement of the loader arms 24 and the implement 30. For instance, the lift assembly 22 may include a pair of hydraulic lift cylinders 32 (one of which is shown) coupled between the chassis 16 and the loader arms 24 for raising and lowering the loader arms 24 relative to the ground and a pair of hydraulic tilt cylinders 34 (one of which is shown) for tilting or pivoting the implement 30 relative to the loader arms 24 (e.g., between dump and curl positions). As shown in the illustrated embodiment, each tilt cylinder 34 may, for example, be coupled to the implement 30 via a linkage or lever arm 36. In such an embodiment, extension or retraction of the tilt cylinders 34 may result in the lever arm 36 pivoting about a given pivot point to tilt the implement 30 relative to the loader arms 24.

Additionally, in several embodiments, the work vehicle 10 may include one or more load weight sensors 40 that are configured to detect an operating parameter associated with the weight of the material or load contained within the implement 30. For instance, in one embodiment, the load weight sensor(s) 40 may correspond to one or more pressure sensors configured to detect the load on the lift cylinder(s) 32 as the loader arms 24 are pivoted upwardly to raise the implement 30. As is generally understood, the load on the lift cylinder(s) 32 correlates to the weight of the material within the implement 30. Thus, by detecting load on the lift cylinder(s) 32, the weight of the material being lifted can be determined. However, in other embodiments, the load weight sensor(s) 40 may correspond to any other suitable sensor(s) and/or sensing device(s) that is configured to detect a parameter associated with the weight of the material or load contained within the implement 30.

As is generally understood, when performing a material moving operation in which material is being scooped up into the implement 30 and subsequently moved to a different location, the implement 30 may be initially moved to a lowered position (e.g., as shown in the solid lines in FIG. 1) to allow the implement 30 to be driven or pushed into a pile or source 50 of material to be collected. The implement 30 may then be pivoted or curled upwardly (e.g., via operation of the tilt cylinders 34) to maintain the collected material within the implement 30 as the implement 30 is being lifted relative to the material source 50 by raising the associated loader arms 24 (e.g., via operation of the lift cylinders 32).

As will be described below, as the implement 30 is being initially raised relative to the material source 50 following the collection of material, the weight of the collected material may be determined by an associated controller based on the sensor feedback provided by the load weight sensor(s) 40 and compared to a desired or target weight for such material. If the weight of the collected material is too low, the controller may notify the operator that additional material is required (i.e., that the implement 30 should pushed back into the material source 50). In contrast, if the weight of the collected material is too high, the controller may automatically initiate an implement shaking operation (e.g., via operation of the tilt cylinders 34) to remove material from the implement 30 as it is being lifted relative to the material source 50. Once the weight of the material within the implement 30 is equal to the target weight (or within a given tolerance range defined relative to the target weight), the controller may notify the operator that the desired amount of material is within the implement 40.

It should be appreciated that the configuration of the work vehicle 10 described above and shown in FIG. 1 is provided only to place the present subject matter in an exemplary field of use. Thus, it should be appreciated that the present subject matter may be readily adaptable to any manner of work vehicle configuration. For example, the work vehicle 10 was described above as including a pair of lift cylinders 32 and a pair of tilt cylinders 34. However, in other embodiments, the work vehicle 10 may, instead, include any number of lift cylinders 32 and/or tilt cylinders 24, such as by only including a single lift cylinder 32 for controlling the movement of the loader arms 24 and/or a single tilt cylinder 34 for controlling the movement of the implement 30.

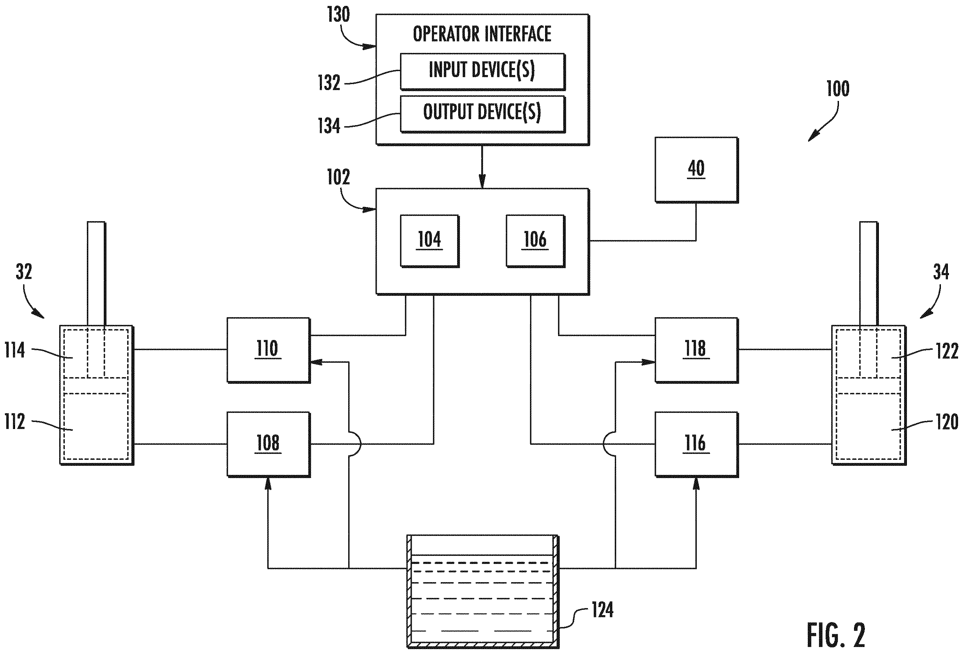

Referring now to FIG. 2, a schematic diagram of one embodiment of a system 100 for automatic weight monitoring and control during the performance of a material moving operation is illustrated in accordance with aspects of the present subject matter. For purposes of discussion, the system 100 will be described herein with reference to the work vehicle 10 shown and described above with reference to FIG. 1. However, it should be appreciated that, in general, the disclosed system 100 may be utilized to control the operation of any work vehicle having any suitable vehicle configuration.

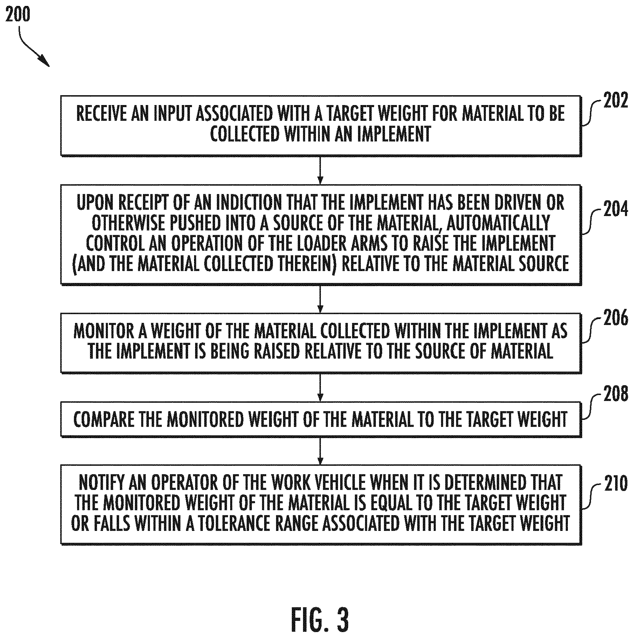

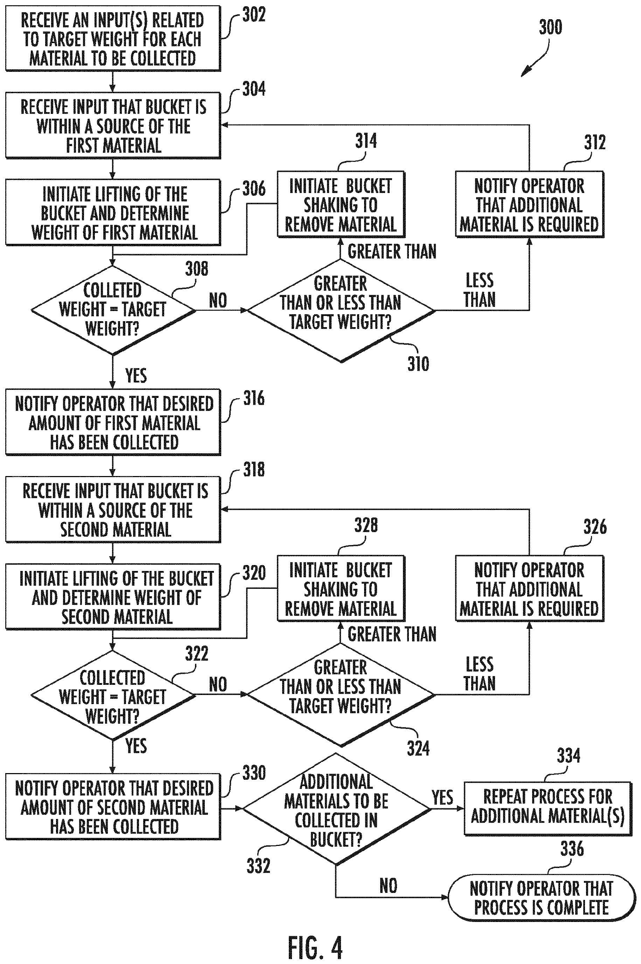

As shown, the system 100 may generally include a controller 102 configured to electronically control the operation of one or more components of the work vehicle 10, such as the various hydraulic components of the work vehicle 10 (e.g., the lift cylinders 32 and the tilt cylinders 34). In general, the controller 102 may comprise any suitable processor-based device known in the art, such as a computing device or any suitable combination of computing devices. Thus, in several embodiments, the controller 102 may include one or more processor(s) 104 and associated memory device(s) 106 configured to perform a variety of computer-implemented functions. As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 106 of the controller 102 may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements. Such memory device(s) 106 may generally be configured to store suitable computer-readable instructions that, when implemented by the processor(s) 104, configure the controller 102 to perform various computer-implemented functions, such as by performing one or more aspects of the method 200 described below with reference to FIG. 3 and/or the control algorithm 300 described below with reference to FIG. 4. In addition, the controller 102 may also include various other suitable components, such as a communications circuit or module, one or more input/output channels, a data/control bus and/or the like.

It should be appreciated that the controller 102 may correspond to an existing controller of the work vehicle 10 or the controller 102 may correspond to a separate processing device. For instance, in one embodiment, the controller 102 may form all or part of a separate plug-in module that may be installed within the work vehicle 10 to allow for the disclosed system and method to be implemented without requiring additional software to be uploaded onto existing control devices of the vehicle 10.

In several embodiments, the controller 102 may be coupled to suitable components for controlling the operation of the various actuators 32, 34 of the work vehicle 10. For example, as shown in FIG. 2, the controller 102 may be communicatively coupled to suitable valves 108, 110 (e.g., solenoid-activated valves) configured to control the supply of hydraulic fluid (e.g., from an associated tank 124) to each lift cylinder 32 (only one of which is shown in FIG. 2). Specifically, as shown in the illustrated embodiment, the system 100 may include a first lift valve 108 for regulating the supply of hydraulic fluid to a cap end 112 of each lift cylinder 32. In addition, the system 100 may include a second lift valve 110 for regulating the supply of hydraulic fluid to a rod end 114 of each lift cylinder 32. Moreover, the controller 102 may be communicatively coupled to suitable valves 116, 118 (e.g., solenoid-activated valves) configured to regulate the supply of hydraulic fluid (e.g., from the tank 124) to each tilt cylinder 34 (only one of which is shown in FIG. 2). For example, as shown in the illustrated embodiment, the system 100 may include a first control valve 116 for regulating the supply of hydraulic fluid to a cap end 120 of each tilt cylinder 34 and a second control valve 118 for regulating the supply of hydraulic fluid to a rod end 122 of each tilt cylinder 34.

Additionally, as shown in FIG. 2, the controller 102 may be communicatively coupled to an operator interface 130 (e.g., a human-machine interface(s)) housed within the operator's cab 18 that allows for operator inputs to be provided to the controller 102 as well as notifications to be provided to the operator. For instance, the operator interface 130 may include one or more input devices 132 (e.g., a control panel, one or more buttons, levers, and/or the like) for providing operator inputs to the controller 102. In a particular embodiment, at least one of input device(s) 132 may be configured to allow the operator to input a desired or target weight of material to be collected within the implement 30. For instance, when performing a material moving operation in which a single material will be collected within the implement 30, the operator may use the input device(s) 132 to input a target weight (and, optionally, a tolerance range defined relative to the target weight) for such material into the controller 102. Similarly, when performing a multi-material moving operation in which two or more materials will be collected within the implement 30, the operator may use the input device(s) 132 to input a target weight (and, optionally, a tolerance range defined relative to the target weight) for each material to be collected.

The operator interface 130 may also include one or more output devices 134 (e.g., a display, speakers, etc.) for providing notifications to the operator. For instance, as will be described below, the controller 102 may be configured to generate notifications associated with the weight(s) of the material(s) collected within the implement, such as when the weight of a given material is equal to the operator-selected target weight (or falls within a given tolerance range of the target) or when the weight is unacceptable (e.g., too low or too high). In such instance(s), the controller 102 may be configured to transmit suitable control signals to the appropriate output device(s) 134 to notify the operator of such weight-related information.

Moreover, the controller 102 may also be communicatively coupled to one or more sensors for monitoring one or more operating parameters of the work vehicle 10. For instance, as shown in FIG. 2, the controller 102 may be coupled to the load weight sensor(s) 40 for monitoring the weight of the material collected within the implement 30. As indicated above, the load weight sensor(s) 40 may, for example, correspond to a pressure sensor provided in operative association with the lift cylinders 32. In such an embodiment, as the lift cylinders 32 are being used to raise the implement 30, load or pressure data from the load weight sensor(s) 40 may be processed by the controller 102 to determine the weight of the material collected within the implement 30.

In accordance with aspects of the present subject matter, the disclosed system 100 may be used to automate aspects of the material collection portion of a material moving operation. Specifically, in several embodiments, an operator may input a desired or target weight of material to be collected (e.g., via an input device(s) 132 of the operator interface 130) and drive the implement 30 into the pile or source of the material. Once the implement 30 has been pushed into the material pile/source, the operator may, for example, provide an input (e.g., via an input device(s) 132 of the operator interface 130) requesting that the controller 102 execute a control algorithm to automatically control the operation of the vehicle 10 to pull the desired weight of material from the pile/source. For instance, upon receipt of the operator input, the controller 102 may be configured to automatically initiate control of the operation of the lift cylinders 32 to raise the loader arms 24, thereby lifting the implement 30 relative the material source/pile. As the implement 30 is being raised relative the material source/pile, the controller 102 may be configured to monitor the weight of the material within the implement 30. If the load weight is too low (e.g., lower than the target weight or below a minimum threshold associated with the tolerance range defined relative to the target weight), the controller 102 may notify the operator (e.g., via an output device(s) 134 of the user interface 130) that additional material is required, which may then prompt the operator to resume control and push the implement 30 back into the material source/pile. In contrast, if the load weight is too high (e.g., higher than the target weight or above a maximum threshold associated with the tolerance range defined relative to the target weight), the controller 102 may be configured to automatically execute an implement shaking operation as the implement 30 is being lifted relative to the material source/pile to remove material from the implement 30. For instance, the controller 102 may rapidly retract/extend the tilt cylinders 34 to shake material out of the implement 30 while continuously monitoring the load weight. Once the load weight is equal to the target weight (or falls within the tolerance range defined relative to the target weight), the controller 102 may notify the operator (e.g., via an output device(s) 134 of the user interface 130) that the desired amount of material is contained within the implement 30.

The above-described process (or variations thereof) may be used to monitor and control the amount of material collected within the implement 30 during the material collection portion of a material moving operation, regardless of whether a single material or multiple different materials are being collected within the implement 30. For instance, as will be described below with reference to the embodiment of the control algorithm 300 shown in FIG. 4, the disclosed system 100 may be used for automatic weight monitoring and control when performing a multi-material moving operation in which two or more different materials are being collected within the implement 30.

Referring still to FIG. 2, it should be appreciated that the memory 106 of the controller 102 may be configured to store information accessible to the processor(s) 104, including data that can be retrieved, manipulated, created and/or stored by the processor(s) 104 and instructions that can be executed by the processor(s) 104. In several embodiments, the data may be stored in one or more databases. For example, the memory 106 may include a weight database storing data associated with both the target weight(s) of each material to be collected (including any tolerance range(s) to be applied thereto) and the monitored weight values determined based on the data received from the load weight sensor(s) 40. For instance, the target weight(s) may be input into the controller 102 and stored within the weight database. Thereafter, the controller 102 may access the target weight as a reference value while the actual weight of the material is being monitored during the material collection process. The actual material weight determined by the controller 102 may then be stored within the database and subsequently used, for example, as a tare or reference weight to determine the weight of an additional material that has been collected within the implement (e.g., as will be described below with reference to FIG. 4).

Referring now to FIG. 3, a flow diagram of one embodiment of a method 200 for providing automatic weight monitoring and control during the performance of a material moving operation is illustrated in accordance with aspects of the present subject matter. In general, the method 200 will be described herein with reference to the system 100 described above with reference to FIG. 2. However, it should be appreciated by those of ordinary skill in the art that the disclosed method 200 may be implemented within any other system having any other suitable system configuration. In addition, although FIG. 3 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown in FIG. 3, at (202), the method 200 may include receiving, with a computing device, an input associated with a target weight for a material to be collected within the implement. For instance, as indicated above, the controller 102 may be configured to receive an input (e.g., via an input device(s) 132 of the operator interface 130) that associated with an operator-selected weight for the material to be collected within the implement 30. In addition, in one embodiment, the operator may also be allowed to select a tolerance range to be applied for the target weight. For instance, the operator may indicate that a tolerance range of plus-or-minus (+/-) a given percentage of the target weight may be acceptable for the current operation being performed, such as a tolerance range of +/- 10% of the target weight, +/- 5% of the target weight, +/- 2% of the target weight, or +/- 1% of the target weight. Alternatively, the target weight (and/or the applicable tolerance range) may be pre-stored within the controller's memory 106. In such instance, the controller 102 may "receive" an input associated with the target weight by accessing the weight data stored within its memory 106.

Additionally, at (204), upon receipt of an indication that implement has been driven or otherwise pushed into the source of the material, the method 200 may include automatically controlling an operation of the loader arms to raise the implement and the material collected therein relative to the material source. For instance, as indicated above, in one embodiment, the operator may drive the implement 30 into the material pile/source and then provide an input (e.g., via an input device(s) 132 of the operator interface 130) requesting that the controller 102 execute a control algorithm to automatically control the operation of the vehicle 10 to pull the desired weight of material from the pile/source. In such an embodiment, following receipt of the operator input, the controller 102 may automatically control the operation of the loader arms 24 (e.g., via control of the associated lift cylinders 32) to raise the implement 30 (and the material collected therein) relative to the material source. In addition, the controller 102 may also automatically to control the operation of the tilt cylinders 34 to tilt or curl the implement 30 upwardly as it is being raised to maintain the collected material within the implement 30.

Moreover, at (206), the method 200 may include monitoring a weight of the material collected within the implement as the implement is being raised relative to the source of material. Specifically, as indicated above, the controller 102 may be configured to monitor the weight of the material within the implement 30 based on the data received from the load weight sensor(s) 40. For instance, the load weight sensor(s) 40 may detect the load or pressure on the lift cylinders 32 as the implement 30 is being raised, which may then be used to determine the weight of the material within the implement 30.

Referring still to FIG. 3, at (208), the method 200 may include comparing the monitored weight of the material to the target weight. Specifically, as indicated above, the target weight (and, optionally, an associated tolerance range) may be stored within the controller's memory 106. Thus, as the controller 102 is monitoring the weight of the material collected within the implement 30, the monitored weight may be continuously compared to the target weight (and/or the associated tolerance range) to determine if the weight is insufficient (i.e., too low) or excessive (i.e., too high). As described above, if the weight is too low when compared to the target weight (and/or the associated tolerance range), the controller 102 may be configured to notify the operator that additional material is required. In contrast, if the weight is too high when compared to the target weight (and/or the associated tolerance range), the controller 102 may be configured initiate an automatic implement shaking mode to remove material from the implement 30 until the monitored weight is equal to the target weight (or falls within the tolerance range associated with the target weight).

Additionally, at (210), the method 200 may include notifying an operator of the work vehicle when it is determined that the monitored weight of the material is equal to the target weight or fails within the tolerance range associated with the target weight. Specifically, when the desired amount of material is within the implement, the controller 102 may be configured to notify the operator accordingly, such as by transmitting suitable control signals to an output device 134 of the operator interface 130 to generate an appropriate operator notification. The operator may then proceed to move the collected material to the desired location. Alternatively, as will be described below with reference to FIG. 4, once the desired amount of material has been collected within the implement 30, the operator may them move the vehicle 10 to another source of material to allow an additional material to be collected within the implement 30, in which case the weight of such additional material may be monitored to ensure that the desired ratio or mixture of materials is obtained.

Referring now to FIG. 4, a flow diagram of an example control algorithm 300 representing a specific implementation of one embodiment of a method for providing automatic weight monitoring and control during the performance of a material moving operation is illustrated in accordance with aspects of the present subject matter. It should be appreciated by those of ordinary skill in the art that, although FIG. 4 depicts steps performed in a particular order for purposes of illustration and discussion, the algorithms discussed herein are not limited to any particular order or arrangement. One skilled in the art, using the disclosures provided herein, will appreciate that various steps of the algorithms disclosed herein can be omitted, rearranged, combined, and/or adapted in various ways without deviating from the scope of the present disclosure.

As will be described below, the disclosed control algorithm 300 is directed to an implementation in which two or more materials are being collected within an implement (e.g., a bucket), such as when a work vehicle is being used to perform a multi-material moving operation or material mixing operation. Specifically, the control algorithm 300 will be described with reference to the collection of two different materials within the bucket, namely a first material and second material. However, as will be described below, the disclosed algorithm 300 may also be used when three or more materials are being collected within the bucket. Additionally, it should be appreciated that aspects of the control algorithm 300 shown in FIG. 4 may also be used when collecting a single material within the bucket. For instance, the initial control steps of the algorithm (e.g., 302-314) may be used for collecting a single material within the bucket.

As shown in FIG. 4, at (302), an input may be received by the controller 102 that is associated with the target weight for each material to be collected within the bucket. For instance, as indicated above, the operator may provide an operator input associated with the target weight for each material (and, optionally, a tolerance range to be associated with each target weight) via the operator interface 130. For instance, when two separate materials are being collected within the bucket (e.g., a first material and a second material), the operator may provide an input(s) associated with a target weight for both the first material and the second material (and, optionally, a tolerance range to be applied for each respective target weight). Depending on the desired ratio of the materials, the target weights may be the same or may differ.

In the illustrated embodiment, the target weight for each material to be collected is shown as being received prior to the collection of any of the materials. However, in alternative embodiments, the operator may input the target weight for each material at different point in time during the process, such as immediately before each material is collected.

Additionally, at (304), an input may be received by the controller 102 that indicates that the bucket has been driven or pushed into the source/pile of a first material to be collected, thereby indicating that the bucket is ready to be lifted to collect the first material therein. For instance, as indicated above, the operator may initially drive the bucket into the pile or source of the first material. Thereafter, the operator may, for example, provide an input (e.g., via an input device(s) 132 of the operator interface 130) requesting that the controller 102 execute a control algorithm to automatically control the operation of the vehicle 10 to pull the target weight of material from the pile/source.

Upon receipt of the input, at (306), the controller 102 may be configured to initiate lifting of the bucket (e.g., by controlling the operation of the lift cylinders 32). Additionally, as the bucket is being lifted relative to the source/pile of the first material, the controller 102 may also be configured to determine the weight of the first material within the bucket. For instance, as indicated above, the controller 102 may be communicatively coupled to one or more load weight sensor(s) 40 configured to provide an indication of the weight within the bucket. Thus, as the operation of the lift cylinders 32 is controlled to lift the bucket, the controller 102 may continuously monitor the weight of the first material within the bucket based on the sensor data received from the load weight sensor(s) 40.

Referring still to FIG. 4, at (308), the controller 102 may be configured to compare the collected weight of the first material within the bucket (e.g., as determined at (306)) to the target weight for the first material. Specifically, the controller 102 may be configured to determine whether the collected weight is equal to the target weight (or whether the collected weight falls within a tolerance range defined relative to the target range, when applicable). If not, at (310), the controller 102 may determine whether the collected weight is greater than the target weight (or above a maximum threshold associated with the tolerance range defined relative to the target weight) or less than the target weight (or below a minimum threshold associated with the tolerance range defined relative to the target weight).

As shown in FIG. 4, when the collected weight is less than the target weight (or below the minimum threshold associated with the tolerance range defined relative to the target weight), the controller 102 may, at (312), notify the operator that additional material is required. In such instance, the operator may take over control of the vehicle and drive or push the bucket back into the source/pile of the first material. Once the bucket is back within the material source/pile, the operator may provide an input indicating such to the controller 102 (e.g., at 304), at which point the controller 102 may re-initiate control of the operation (e.g., at 306).

Alternatively, when the collected weight is greater than the target weight (or above the maximum threshold associated with the tolerance range defined relative to the target weight), the controller 102 may, at (314), initiate an automatic bucket shaking operation to remove material from the bucket. For instance, as indicated above, the controller 102 may rapidly retract/extend the tilt cylinder 134 to shake material out of the bucket until the monitored weight is equal to the target weight (or falls below the maximum threshold associated with the tolerance range).

It should be appreciated that, in instances in which the controller 102 determines that the load on the implement 30 exceeds a maximum threshold set for the lift assembly 20, the controller 102 may automatically cancel the operation (e.g., by stopping the lifting action) and/or may notify the operator that such threshold has been reached (in which case the operator may choose to cancel the operation or to adjust the threshold setting).

As shown in FIG. 4, when it is determined that the weight of the first material collected within the bucket is equal to the target weight (or falls within the tolerance range defined relative to the target range, when applicable), the controller 102 may, at (316), be configured to notify the operator (e.g., via an output device(s) 134 of the operator interface 130) that the desired amount of the first material has been collected within the bucket. Thereafter, in the event that the operator simply desires to collect the first material within the bucket, the operation can be terminated.

However, as shown in the illustrated embodiment, a second material is being collected within the bucket in addition to the first material. In such instance, following receipt of the notification that the proper amount of the first material is within the bucket, the operator may navigate the vehicle to the location of the source/pile of the second material and drive or push the bucket into the material source/pile. Thereafter, the operator may, for example, provide an input (e.g., via an input device(s) 132 of the operator interface 130) requesting that the controller 102 automatically control the operation of the vehicle to pull the target weight of the second material from the pile/source. As shown in FIG. 4, the operator input may be received by the controller 102, at (318), thereby indicating that the bucket has been driven or pushed into the source/pile of the second material and that the bucket is ready to be lifted to collect the second material therein.

Upon receipt of the input, at (320), the controller 102 may be configured to initiate lifting of the bucket while simultaneously monitoring the weight of the second material within the bucket. Similar to control step (306) described above, the controller 102 may continuously monitor the weight of the material within the bucket based on the sensor data received from the load weight sensor(s) 40. However, given that the bucket now includes amounts of both the first material and the second material, the monitored weight determined based on the sensor data corresponds to the collective weight of the first and second materials within the bucket. Thus, to determine the weight of the second material within the bucket, the controller 102 may be configured to calculate a weight differential between the monitored collective weight and the final weight of the first material (e.g., as determined at (308)). For instance, once it is determined that the weight of the first material collected within the bucket is equal to the target weight (or falls within the tolerance range defined relative to the target range, when applicable), the final monitored weight value for the first material may be stored within the controller's memory 106. Such final weight value may then be used with the collective weight value of both the first and second materials to determine the weight of the second material within the bucket.

Still referring to FIG. 4, at (322), the controller 102 may be configured to compare the collected weight of the second material within the bucket (e.g., as determined at (320)) to the target weight for the second material. Specifically, the controller 102 may be configured to determine whether the collected weight is equal to the target weight (or whether the collected weight falls within a tolerance range defined relative to the target range, when applicable). If not, at (324), the controller 102 may determine whether the collected weight of the second material is greater than the target weight (or above a maximum threshold associated with the tolerance range defined relative to the target weight) or less than the target weight (or below a minimum threshold associated with the tolerance range defined relative to the target weight).

As shown in FIG. 4, when the collected weight of the second material is less than the target weight (or below the minimum threshold associated with the tolerance range defined relative to the target weight), the controller 102 may, at (326), notify the operator that additional material is required. In such instance, the operator may take over control of the vehicle and drive or push the bucket back into the source/pile of the second material. Once the bucket is back within the material source/pile, the operator may provide an input indicating such to the controller 102 (e.g., at 318), at which point the controller may re-initiate control of the operation (e.g., at 320). Alternatively, when the collected weight of the second material is greater than the target weight (or above the maximum threshold associated with the tolerance range defined relative to the target weight), the controller 102 may, at (328), initiate an automatic bucket shaking operation to remove material from the bucket until the monitored weight is equal to the target weight (or falls below the maximum threshold associated with the tolerance range). In doing so, the controller 102 may shake the bucket less aggressively (e.g., as compared to when only the first material is contained within the bucket) such that all or substantially all of the material removed from the bucket corresponds to the second material. This should be possible given that the first material will be located at the bottom of the bucket while the second material will be located at the top of the bucket.

Similar to that described above, if the controller 102 determines that the load on the implement 30 exceeds a maximum threshold set for the lift assembly 20 as the implement 30 is being lifted relative to the material source/pile, the controller 102 may automatically cancel the operation and/or may notify the operator that such threshold has been reached (in which case the operator may choose to cancel the operation or to adjust the threshold setting).

Once it is determined that the weight of the second material collected within the bucket is equal to the target weight (or falls within the tolerance range defined relative to the target range, when applicable), the controller 102 may, at (330), be configured to notify the operator (e.g., via an output device(s) of the operator interface) that the desired amount of the second material has been collected within the bucket. Thereafter, as shown in FIG. 4, at (332), a determination may be made as to whether any further materials are to be collected within the bucket in addition to the first and second materials. If so, at (334), the controller 102 may be configured to repeat the same or similar process as those described above with the reference to the first and second materials for the subsequent third material, fourth material, and so on. However, if no additional materials are to be collected within the bucket, the controller 102 may, at (336), notify the operator that the material collection process is complete.

It is to be understood that the steps of the method/algorithm 200/300 are performed by the controller 102 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the controller 102 described herein, such as the method/algorithm 200/300, is implemented in software code or instructions which are tangibly stored on a tangible computer readable medium. The controller 102 loads the software code or instructions via a direct interface with the computer readable medium or via a wired and/or wireless network. Upon loading and executing such software code or instructions by the controller 102, the controller 102 may perform any of the functionality of the controller 102 described herein, including any steps of the method/algorithm 200/300 described herein.

The term "software code" or "code" used herein refers to any instructions or set of instructions that influence the operation of a computer or controller. They may exist in a computer-executable form, such as machine code, which is the set of instructions and data directly executed by a computer's central processing unit or by a controller, a human-understandable form, such as source code, which may be compiled in order to be executed by a computer's central processing unit or by a controller, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a controller.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method for providing automatic weight monitoring and control during the performance of a material moving operation by a work vehicle (10), the work vehicle (10) including a loader arm (28) and an implement (30) coupled to the loader arm (28), the method being **characterized by**:
receiving, with a computing device (102), at least one input associated with a first target weight for a first material to be collected within the implement (30) and a second target weight for a second material to be collected within the implement (30);
upon receipt of an indication that the implement (30) has been pushed into a source of the first material, monitoring, with the computing device (102), a weight of the first material collected within the implement (30) as the implement (30) is being raised relative to the source of the first material;
notifying, with the computing device (102), an operator of the work vehicle (10) when it is determined that the weight of the first material is equal to the first target weight or falls within a first tolerance range associated the first target weight;
upon receipt of an indication that the implement (30) has been pushed into a source of the second material, monitoring, with the computing device (102), a collective weight of the first and second materials as the implement (30) is being raised relative to the source of the second material;
determining, with the computing device (102), a weight of the second material collected within the implement (30) based at least in part on the collective weight of the first and second materials within the implement (30); and
notifying, with the computing device (102), the operator of the work vehicle (10) when it is determined that the weight of the second material is equal to the second target weight or falls within a second tolerance range associated with the second target weight.

2. The method as in claim 1, further comprising storing, within memory (106) of the computing device (102), a final monitored weight of the first material within the implement (30).

3. The method as in claim 2, wherein determining the weight of the second material collected within the implement (30) comprises determining a differential weight between the collective weight of the first and second materials within the implement (30) and the final monitored weight of the first material.

4. The method as in any preceding claim, further comprising automatically controlling an operation of the loader arms (28) to raise the implement (30) relative to the source of the first material as the weight of the first material is being monitored.

5. The method as in claim 4, further comprising:
determining that the weight of the first material is excessive as compared to the first target weight or the tolerance range associated with the first target weight; and
automatically controlling an operation of the implement (30) to remove an amount of the first material from the implement (30).

6. The method as in claim 5, wherein automatically controlling the operation of the implement (30) comprises automatically shaking the implement (30) to remove the amount of the first material from the implement (30).

7. The method as in claim 4, further comprising:
determining that the weight of the first material is insufficient as compared to the first target weight or the tolerance range associated with the first target weight; and
notifying the operator that an additional amount of the first material still needs to be collected within the implement (30).

8. The method as in any preceding claims, further comprising automatically controlling an operation of the loader arms (28) to raise the implement (30) relative to the source of the second material as the collective weight of the first and second materials is being monitored.

9. The method as in claim 8, further comprising:
determining that the weight of the second material is excessive as compared to the second target weight or the tolerance range associated with the second target weight; and
automatically controlling an operation of the implement (30) to remove an amount of the second material from the implement (30).

10. The method as in claim 8, further comprising:
determining that the weight of the second material is insufficient as compared to the second target weight or the tolerance range associated with the second target weight; and
notifying the operator that an additional amount of the second material still needs to be collected within the implement (30).

11. A system (100) for automatic weight monitoring and control during the performance of first and second material moving operations by a work vehicle (10), the system (100) including a loader arm (28), an implement (30) pivotably coupled to the loader arm (28), and a load weight sensor (40) configured to detect an operating parameter indicative of a weight of material contained within the implement (30), the system (100) further including a controller (102) communicatively coupled to the load weight sensor (40), whereby :
the controller (102) is configured to:
receive an input associated with first and second target weights for the material to be collected within the implement (30);
upon receipt of an indication that the implement (30) has been pushed into a source of the first material, automatically control an operation of the loader arm (28) to raise the implement (30) and the first material collected therein relative to the source of the material;
monitor a weight of the first material collected within the implement (30) as the implement (30) is being raised relative to the source of material; and notify an operator of the work vehicle (10) when it is determined that the monitored weight of the first material is equal to the first target weight of falls within a tolerance range associated with the first target weight;
upon receipt of an indication that the implement (30) has been pushed into a source of the second material, monitoring a collective weight of the first and second materials as the implement (30) is being raised relative to the source of the second material;
determining a weight of the second material collected within the implement (30) based at least in part on the collective weight of the first and second materials within the implement (30); and
notifying the operator of the work vehicle (10) when it is determined that the weight of the second material is equal to the second target weight or falls within a second tolerance range associated with the second target weight.

12. The system (100) as in claim 11, wherein the controller (102) is further configured to:
determine that the weight of the material is excessive as compared to the target weight or the tolerance range associated with the target weight; and
automatically control an operation of the implement (30) to remove an amount of the material from the implement (30).

13. The system (100) as in claim 12, wherein the controller (102) is configured to automatically control the operation of the implement (30) by automatically shaking the implement (30).

14. The system (100) as in claim 11, wherein the controller (102) is further configured to:
determine that the weight of the material is insufficient as compared to the target weight or the tolerance range associated with the target weight; and
notify the operator that an additional amount of the material still needs to be collected within the implement (30).

15. The system as in claim 11, wherein the load weight sensor (40) is configured to detect a load applied on a lift cylinder (32) of the work vehicle (10), the lift cylinder (32) configured to control the movement of the loader arm (28).

## Patentansprüche

1. Verfahren zum Bereitstellen einer automatischen Gewichtsüberwachung und - steuerung während der Durchführung eines Materialbewegungsvorgangs durch ein Arbeitsfahrzeug (10), wobei das Arbeitsfahrzeug (10) einen Laderarm (28) und ein Arbeitsgerät (30) umfasst, das an den Laderarm (28) gekoppelt ist, wobei das Verfahren **gekennzeichnet ist durch**:
Empfangen von mindestens einem Eingangssignal, das mit einem ersten Zielgewicht eines innerhalb des Arbeitsgeräts (30) zu sammelnden ersten Materials und einem zweiten Zielgewicht eines innerhalb des Arbeitsgeräts (30) zu sammelnden zweiten Materials verknüpft ist, **durch** eine Recheneinrichung (102);
bei Erhalt eines Hinweises, dass das Arbeitsgerät (30) in eine Quelle des ersten Materials getrieben wurde, Überwachen eines Gewichts des innerhalb des Arbeitsgeräts (30) gesammelten ersten Materials **durch** die Recheneinrichung (102), wenn das Arbeitsgerät (30) relativ zu der Quelle des ersten Materials angehoben wird;
Benachrichtigen einer Bedienperson des Arbeitsfahrzeugs (10) **durch** die Recheneinrichung (102), wenn festgestellt wird, dass das Gewicht des ersten Materials gleich dem ersten Zielgewicht ist oder in einen ersten Toleranzbereich fällt, der zum ersten Zielgewicht zugehörig ist;
bei Erhalt eines Hinweises, dass das Arbeitsgerät (30) in eine Quelle des zweiten Materials getrieben wurde, Überwachen eines Gesamtgewichts des ersten und des zweiten Materials **durch** die Recheneinrichung (102), wenn das Arbeitsgerät (30) relativ zu der Quelle des zweiten Materials angehoben wird;
Bestimmen eines Gewichts des innerhalb des Arbeitsgeräts (30) gesammelten zweiten Materials **durch** die Recheneinrichung (102) zumindest teilweise basierend auf dem Gesamtgewicht des ersten und des zweiten Materials innerhalb des Arbeitsgeräts (30); und
Benachrichtigen der Bedienperson des Arbeitsfahrzeugs (10) **durch** die Recheneinrichung (102), wenn festgestellt wird, dass das Gewicht des zweiten Materials gleich dem zweiten Zielgewicht ist oder in einen zweiten Toleranzbereich fällt, der zu dem zweiten Zielgewicht zugehörig ist.

2. Verfahren nach Anspruch 1, das des Weiteren ein Speichern eines endgültigen überwachten Gewichts des ersten Materials innerhalb des Arbeitsgeräts (30) in einem Datenspeicher (106) umfasst.

3. Verfahren nach Anspruch 2, wobei das Feststellen des Gewichts des innerhalb des Arbeitsgeräts (30) gesammelten zweiten Materials das Feststellen eines Differenzgewichts zwischen dem Gesamtgewicht des ersten und des zweiten Materials innerhalb des Arbeitsgeräts (30) und dem endgültigen überwachten Gewicht des ersten Materials umfasst.

4. Verfahren nach einem der vorhergehenden Ansprüche, das des Weiteren ein automatisches Steuern eines Betriebs des Laderarms (28) umfasst, um das Arbeitsgerät (30) relativ zu der Quelle des ersten Materials anzuheben, wenn das Gewicht des ersten Materials überwacht wird.

5. Verfahren nach Anspruch 4, das des Weiteren aufweist:
Feststellen, dass das Gewicht des ersten Materials verglichen mit dem ersten Zielgewicht oder mit dem Toleranzbereich, der zu dem ersten Zielgewicht zugehörig ist, überhöht ist; und automatisches Steuern eines Betriebs des Arbeitsgeräts (30) zum Entfernen einer Menge des ersten Materials aus dem Arbeitsgerät (30).

6. Verfahren nach Anspruch 5, wobei das automatische Steuern des Betriebs des Arbeitsgeräts (30) ein automatisches Schütteln des Arbeitsgeräts (30) zur Entfernung der Menge des ersten Materials aus dem Arbeitsgerät (30) umfasst.

7. Verfahren nach Anspruch 4, das des Weiteren umfasst:
Feststellen, dass das Gewicht des ersten Materials verglichen mit dem ersten Zielgewicht oder mit dem Toleranzbereich, der zu dem ersten Zielgewicht zugehörig ist, ungenügend ist; und Benachrichtigen der Bedienperson, dass eine zusätzliche Menge des ersten Materials noch im Arbeitsgerät (30) gesammelt werden muss.

8. Verfahren nach einem der vorhergehenden Ansprüche, das des Weiteren ein automatisches Steuern eines Betriebs des Laderarms (28) umfasst, um das Arbeitsgerät (30) relativ zu der Quelle des zweiten Materials anzuheben, wenn das Gesamtgewicht des ersten und des zweiten Materials überwacht wird.

9. Verfahren nach Anspruch 8, das des Weiteren umfasst:
Feststellen, dass das Gewicht des zweiten Materials verglichen mit dem zweiten Zielgewicht oder mit dem Toleranzbereich, der zu dem zweiten Zielgewicht zugehörig ist, überhöht ist; und
automatisches Steuern eines Betriebs des Arbeitsgeräts (30), um eine Menge des zweiten Materials aus dem Arbeitsgerät (30) zu entfernen.

10. Verfahren nach Anspruch 8, das des Weiteren umfasst:
Feststellen, dass das Gewicht des zweiten Materials verglichen mit dem zweiten Zielgewicht oder mit dem Toleranzbereich, der zu dem zweiten Zielgewicht zugehörig ist, ungenügend ist; und
Benachrichtigen der Bedienperson, dass eine zusätzliche Menge des zweiten Materials noch im Arbeitsgerät (30) gesammelt werden muss.

11. System (100) zur automatischen Gewichtsüberwachung und -steuerung während der Durchführung eines ersten und zweiten Materialbewegungsvorgangs durch ein Arbeitsfahrzeug (10), wobei das System (100) einen Laderarm (28), ein Arbeitsgerät (30), das schwenkbar mit dem Laderarm (28) gekoppelt ist, und einen Beladungsgewichtssensor (40) umfasst, der dazu eingerichtet ist, einen Betriebsparameter zu erfassen, der kennzeichnend für ein Gewicht eines im Arbeitsgerät (30) enthaltenen Materials ist, wobei das System (100) des Weiteren eine Steuereinrichtung (102) umfasst, die kommunizierend mit dem Beladungsgewichtssensor (40) gekoppelt ist, wobei:
die Steuereinrichtung (102) eingerichtet ist zum:
Empfangen eines Eingangssignals, das mit einem ersten und einem zweiten Zielgewicht eines im Arbeitsgerät (30) zu sammelnden Materials verknüpft ist;
bei Erhalt eines Hinweises, dass das Arbeitsgerät (30) in eine Quelle des ersten Materials getrieben wurde, automatischen Steuern eines Betriebs des Laderarms (28), um das Arbeitsgerät (30) und das darin gesammelte erste Material relativ zu der Quelle des Materials anzuheben;
Überwachen eines Gewichts des im Arbeitsgerät (30) gesammelten ersten Materials, wenn das Arbeitsgerät (30) relativ zu der Quelle des Materials angehoben wird; und
Benachrichtigen einer Bedienperson des Arbeitsfahrzeugs (10), wenn festgestellt wird, dass das überwachte Gewicht des ersten Materials gleich dem ersten Zielgewicht ist oder in einen Toleranzbereich fällt, der zu dem ersten Zielgewicht zugehörig ist;
bei Erhalt eines Hinweises, dass das Arbeitsgerät (30) in eine Quelle des zweiten Materials getrieben wurde, Überwachen eines Gesamtgewichts des ersten und des zweiten Materials, wenn das Arbeitsgerät (30) relativ zu der Quelle des zweiten Materials angehoben wird;
Bestimmen eines Gewichts des im Arbeitsgerät (30) gesammelten zweiten Materials zumindest teilweise basierend auf dem Gesamtgewicht des ersten und des zweiten Materials im Arbeitsgerät (30); und
Benachrichtigen der Bedienperson des Arbeitsfahrzeugs (10), wenn festgestellt wird, dass das Gewicht des zweiten Materials gleich dem zweiten Zielgewicht ist oder in einen zweiten Toleranzbereich fällt, der zu dem zweiten Zielgewicht zugehörig ist.

12. System (100) nach Anspruch 11, wobei die Steuereinrichtung (102) des Weiteren eingerichtet ist zum:
Feststellen, dass das Gewicht des Materials verglichen mit dem Zielgewicht oder mit dem Toleranzbereich, der zu dem Zielgewicht zugehörig ist, überhöht ist; und
Automatischen Steuern eines Betriebs des Arbeitsgeräts (30), um eine Menge des Materials aus dem Arbeitsgerät (30) zu entfernen.

13. System (100) nach Anspruch 12, wobei die Steuerungseinrichtung (102) des Weiteren dazu eingerichtet ist, den Betrieb des Arbeitsgeräts (30) durch automatisches Schütteln des Arbeitsgeräts (30) automatisch zu steuern.

14. System (100) nach Anspruch 11, wobei die Steuerungseinrichtung (102) des Weiteren eingerichtet ist zum:
Feststellen, dass das Gewicht des Materials verglichen mit dem Zielgewicht oder mit dem Toleranzbereich, der zu dem Zielgewicht zugehörig ist, ungenügend ist; und
Benachrichtigen der Bedienperson, dass eine zusätzliche Menge des Materials noch im Arbeitsgerät (30) gesammelt werden muss.

15. System nach Anspruch 11, wobei der Beladungsgewichtssensor (40) dazu eingerichtet ist, eine Last zu ermitteln, die auf einen Hubzylinder (32) des Arbeitsfahrzeugs (10) wirkt, wobei der Hubzylinder (32) dazu eingerichtet ist, die Bewegung des Laderarms (28) zu steuern.

## Revendications

1. Procédé de surveillance et de commande automatiques du poids pendant l'exécution d'une opération de déplacement de matériaux par un véhicule de travail (10), le véhicule de travail (10) comprenant un bras de chargement (28) et un outil (30) couplé au bras de chargement (28), le procédé étant **caractérisé par** les étapes consistant à :
recevoir, à l'aide d'un dispositif informatique (102), au moins une entrée associée à un premier poids cible pour un premier matériau à collecter dans l'outil (30) et un second poids cible pour un second matériau à collecter dans l'outil (30) ;
à la réception d'une indication selon laquelle l'outil (30) a été poussé dans une source du premier matériau, surveiller, à l'aide du dispositif informatique (102), le poids du premier matériau collecté dans l'outil (30) au fur et à mesure que l'outil (30) est soulevé par rapport à la source du premier matériau ;
avertir, à l'aide du dispositif informatique (102), un opérateur du véhicule de travail (10) lorsqu'il est déterminé que le poids du premier matériau est égal au premier poids cible ou se situe dans une première plage de tolérance associée au premier poids
cible ; à la réception d'une indication selon laquelle l'outil (30) a été poussé dans une source du second matériau, surveiller, à l'aide du dispositif informatique (102), un poids collectif du premier et du second matériau au fur et à mesure que l'outil (30) est soulevé par rapport à la source du second matériau ;
déterminer, à l'aide du dispositif informatique (102), le poids du second matériau collecté dans l'outil (30) en se basant au moins en partie sur le poids collectif du premier et du second matériau dans l'outil (30) ; et
avertir, à l'aide du dispositif informatique (102), l'opérateur du véhicule de travail (10) lorsqu'il est déterminé que le poids du second matériau est égal au second poids cible ou se situe dans une seconde plage de tolérance associée au second poids cible.

2. Procédé selon la revendication 1, comprenant en outre le stockage, dans la mémoire (106) du dispositif informatique (102), d'un poids final contrôlé du premier matériau à l'intérieur de l'outil (30).

3. Procédé selon la revendication 2, dans lequel la détermination du poids du second matériau collecté dans l'outil (30) comprend la détermination d'un poids différentiel entre le poids collectif du premier et du second matériau dans l'outil (30) et le poids final contrôlé du premier matériau.

4. Procédé selon l'une quelconque des revendications précédentes, comprenant en outre la commande automatique d'une opération des bras de chargement (28) pour soulever l'outil (30) par rapport à la source du premier matériau lorsque le poids du premier matériau est contrôlé.

5. Procédé selon la revendication 4, comprenant en outre l'étape consistant à :
déterminer que le poids du premier matériau est excessif par rapport au premier poids cible ou à la plage de tolérance associée au premier poids cible; et commander automatiquement une opération de l'outil (30) pour retirer une quantité du premier matériau de l'outil (30).

6. Procédé selon la revendication 5, dans lequel la commande automatique du fonctionnement de l'outil (30) consiste à secouer automatiquement l'outil (30) pour éliminer la quantité de premier matériau de l'outil (30).

7. Procédé selon la revendication 4, comprenant en outre l'étape consistant à :
déterminer que le poids du premier matériau est insuffisant par rapport au premier poids cible ou à la plage de tolérance associée au premier poids cible; et avertir l'opérateur qu'une quantité supplémentaire du premier matériau doit encore être collectée dans l'outil (30).

8. Procédé selon l'une quelconque des revendications précédentes, comprenant en outre la commande automatique d'une opération des bras de chargement (28) pour soulever l'outil (30) par rapport à la source du second matériau lorsque le poids collectif du premier et second matériau est contrôlé.

9. Procédé selon la revendication 8, comprenant en outre l'étape consistant à :
déterminer que le poids du second matériau est excessif par rapport au second poids cible ou à la plage de tolérance associée au second poids cible ;
et
commander automatiquement une opération de l'outil (30) pour enlever une quantité du second matériau de l'outil (30).

10. Procédé selon la revendication 8, comprenant en outre l'étape consistant à :
déterminer que le poids du second matériau est insuffisant par rapport au second poids cible ou à la plage de tolérance associée au second poids cible ; et
avertir l'opérateur qu'une quantité supplémentaire du second matériau doit encore être collectée dans l'outil (30).

11. Système (100) de surveillance et de commande automatiques du poids pendant l'exécution d'une première et d'une deuxième opération de déplacement de matériaux par un véhicule de travail (10), le système (100) comprenant un bras de chargement (28), un outil (30) couplé de manière pivotante au bras de chargement (28), et un capteur de poids de charge (40) configuré pour détecter un paramètre de fonctionnement indiquant un poids de matériau contenu dans l'outil (30), le système (100) comprenant en outre un dispositif de commande (102) couplé de manière communicative au capteur de poids de charge (40), dans lequel :
le dispositif de commande (102) est configuré pour :
recevoir une entrée associée à un premier et un second poids cible pour le matériau à collecter dans l'outil (30) ;
à la réception d'une indication selon laquelle l'outil (30) a été poussé dans une source du premier matériau, commander automatiquement une opération du bras de chargement (28) pour soulever l'outil (30) et le premier matériau qu'il contient par rapport à la source du matériau ;
surveiller le poids du premier matériau collecté dans l'outil (30) lorsque l'outil (30) est soulevé par rapport à la source de matériau ; et
avertir l'opérateur du véhicule de travail (10) lorsqu'il est déterminé que le poids surveillé du premier matériau est égal au premier poids cible ou se situe dans une plage de tolérance associée au premier poids cible ;
à la réception d'une indication selon laquelle l'outil (30) a été poussé dans une source du second matériau, surveiller le poids collectif du premier et du second matériau lorsque l'outil (30) est soulevé par rapport à la source du second matériau ;
déterminer le poids du second matériau collecté dans l'outil (30) en se basant au moins en partie sur le poids collectif du premier et du second matériau dans l'outil (30) ; et
avertir l'opérateur du véhicule de travail (10) lorsqu'il est déterminé que le poids du second matériau est égal au second poids cible ou se situe dans une seconde plage de tolérance associée au second poids cible.

12. Système (100) selon la revendication 11, dans lequel le dispositif de commande (102) est en outre configuré pour :
déterminer que le poids du second matériau est excessif par rapport au second poids cible ou à la plage de tolérance associée au second poids cible ; et
commander automatiquement une opération de l'outil (30) pour enlever une quantité du matériau de l'outil (30).

13. Système (100) selon la revendication 12, dans lequel le dispositif de commande (102) est configuré pour commander automatiquement le fonctionnement de l'outil (30) en secouant automatiquement l'outil (30).

14. Système (100) selon la revendication 11, dans lequel le dispositif de commande (102) est en outre configuré pour :
déterminer que le poids du second matériau est insuffisant par rapport au second poids cible ou à la plage insuffisante tolérance associée au second poids cible ; et
avertir l'opérateur qu'une quantité supplémentaire du matériau doit encore être collectée dans l'outil (30).

15. Système selon la revendication 11, dans lequel le capteur de poids de charge (40) est configuré pour détecter une charge appliquée sur un vérin de levage (32) du véhicule de travail (10), le vérin de levage (32) étant configuré pour commander le mouvement du bras de chargement (28).
